# EUROPEAN PATENT APPLICATION

(11) **EP 4 492 918 A1**
(43) Date of publication of application: **15.01.2025**
(21) Application number: 23843970.7
(22) Date of filing: 04.09.2023
(51) Int. Cl.: H05B 6/68, H05B 6/64, A47J 36/32

(54) **CONTROL METHOD AND CONTROL APPARATUS FOR COOKING APPLIANCE, AND COOKING APPLIANCE**

(30) Priority: 31.05.2023 CN 202310631872
(71) Applicant: Guangdong Midea Kitchen Appliances Manufacturing Co., Ltd., Foshan, Guangdong 528311 (CN)
(72) Inventor: ZHANG, Peiyao, Foshan, Guangdong 528311 (CN); LIU, Tianyi, Foshan, Guangdong 528311 (CN); LU, Xu, Foshan, Guangdong 528311 (CN); SHEN, Guoyang, Foshan, Guangdong 528311 (CN); ZHANG, Xiaohua, Foshan, Guangdong 528311 (CN); YUAN, Shuangxia, Foshan, Guangdong 528311 (CN); CHEN, Xiaojiang, Foshan, Guangdong 528311 (CN)
(74) Representative: RGTH
(86) International application number: PCT/CN2023/116652
(87) International publication number: WO 2024/244192

(57) **Abstract**

The present disclosure provides a control method and a control device of a cooking appliance and a cooking appliance, and the control method of the cooking appliance comprises: under the condition that the temperature of food is larger than or equal to a preset temperature, controlling the cooking appliance to conduct microwave heating to food; obtaining at least one first parameter value of the food; under the condition of obtaining a first preset parameter value in the at least one first parameter value, stopping conducting microwave heating to the food; controlling the cooking appliance to perform hot air heating to the food; obtaining at least one second parameter value of the food; and under the condition that the at least one second parameter value reaches a second preset parameter value corresponding to the food, stopping conducting hot air heating to the food.

## Description

### CROSS-REFERENCE TO RELATED APPLICATIONS

This disclosure claims priority to Chinese Patent Application No. 202310631872.7 filed with China National Intellectual Property Administration on May 31, 2023 and entitled "CONTROL METHOD AND CONTROL DEVICE OF COOKING APPLIANCE AND COOKING APPLIANCE", the entire contents of which are herein incorporated by reference.

### FIELD

The present disclosure relates to the field of household appliances, and particularly relates to a control method and a control device of a cooking appliance and a cooking appliance.

### BACKGROUND

In related technologies, a cooking appliance can cook food in a way that a microwave heating cooperates with an air frying heating, however, in the process of cooking the food in the way that the microwave heating cooperates with the air frying heating, how to determine the time of starting and stopping the two ways and then to improve the cooking efficiency and the cooking effect of the food have become problems that need to be solved urgently.

### SUMMARY

The present disclosure aims to solve at least one of the problems that exist in the prior art.

Thus, the first aspect of the present disclosure provides a control method of a cooking appliance.

The second aspect of the present disclosure provides a control device of a cooking appliance.

The third aspect of the present disclosure provides a control device of a cooking appliance.

The fourth aspect of the present disclosure provides a cooking appliance.

The fifth aspect of the present disclosure provides a computer-readable storage medium.

The first aspect of the present disclosure provides a control method of a cooking appliance, comprising: controlling the cooking appliance to conduct microwave heating to the food under the condition that the temperature of food is larger than or equal to a preset temperature; obtaining at least one first parameter value of the food; stopping conducting microwave heating to the food under the condition of obtaining a first preset parameter value in the at least one first parameter value; controlling the cooking appliance to conduct hot air heating to the food; obtaining at least one second parameter value of the food; and stopping conducting hot air heating to the food under the condition that the at least one second parameter value reaches a second preset parameter value corresponding to the food.

The control method of a cooking appliance provided by the present disclosure can be used for a cooking appliance which has the functions of both microwave heating and air frying at the same time, i.e., the process that the food can be heated through microwave and can further be air fry heated through hot air. It can be understood that the heating efficiency for the food is higher by microwave heating, and it can effectively shorten the heating process during a cooking process and improve the cooking efficiency. The air frying does not use oil or uses a little oil during a frying process, and greatly reduces the oil content of foods, retains nutrients, and produces more aromatic components and less harmful components; in addition, it can achieve coloring the surface of the food, improve the flavor of the food, and thus improve the cooking effect. Cooking the food through the cooperation of the microwave heating with the air frying heating can effectively shorten the cooking time of the food, improve the cooking efficiency, and meanwhile can ensure the nutrients and flavor of the food and thus improve the user experience of the cooking appliance.

Furthermore, in the cooking process, firstly, the temperature of the food can be obtained, a microwave heating device of the cooking appliance can be controlled to conduct microwave heating to the food when the temperature of the food is larger than or equal to the preset temperature, to ensure that the food are rapidly cooked and ensure the heating efficiency of the food. And, the preset temperature can be 0°C, that is, when it is determined that the food are not in a frozen state, microwave heating is then conducted to the food, to ensure that the microwave heating can act on the interior of the food in the microwave heating process and ensure the heating effect of the food.

Furthermore, in the process of heating the food with microwave, at least one first parameter value of the food is obtained. That is, in the process of conducting microwave heating to the food, the first parameter value of the food is obtained in real-time through a sensor configured in the cooking appliance. The microwave heating to the food can be stopped under the condition that the first preset parameter value in the first parameter value is obtained. In an embodiment, the first preset parameter value in the first parameter value can be the maximum value or the minimum value of the first parameter value in a variation process, the variation process of the food can be detected in real-time through obtaining the first parameter value; when the food change to a state desired by a user, i.e., under the condition that the first preset parameter value in the first parameter value is obtained, it means that the doneness of the food has reached the doneness desired by the user, and then it is unnecessary to conduct microwave heating to the food through a microwave device.

Furthermore, when the microwave heating to the food is stopped, hot air heating can be conducted to the food through a hot air device, that is, air frying is conducted to the food. It can be understood that when the food are heated to the desired doneness through the microwave heating way, the food can be heated through the air frying way to achieve the effect of coloring the surface of the food and improving the flavor of the food. Meanwhile, the hot air heating process can effectively avoid the loss of nutrients due to a high temperature state for a long time and ensure the nutritive value of the food in the maximum extent.

Furthermore, in the process of conducting hot air heating to the food, the second parameter value of the food can be obtained; through obtaining the second parameter value, the air frying effect of the food can be detected. Thus, under the condition that the second parameter value of the food reaches the second preset parameter value corresponding to the food, i.e., when the air frying effect of the food achieves the desired effect of the user, the hot air heating to the food can be stopped, and the cooking process of the food is accomplished.

According to the control method of a cooking appliance provided by the present disclosure, cooking the food through the mutual cooperation between the microwave heating and the air fry heating can effectively shorten the cooking time of the food, improve the cooking efficiency, and meanwhile ensure the nutrients and flavor of the food and improve the user experience of the cooking appliance. Meanwhile, in the microwave heating process, through obtaining the first parameter value of the food, the heating duration of the microwave heating is determined, that is, the point of time when the microwave heating is switched into hot air heating; and through obtaining the second parameter value of the food, the duration of the hot air heating to the food is determined. The heating effect of hot air heating is ensured while the heating efficiency of the food is ensured, and then user experience is ensured.

In addition, the control method of a cooking appliance in the above embodiment provided by the present disclosure can further comprise the following additional features.

In some embodiments, the first parameter value comprises the surface hardness of the food, and the second parameter value comprises the water loss rate of the food and the color information of the food.

In the embodiment, the first parameter value of the food can be the surface hardness of the food, in an embodiment, the surface hardness of the food in the cooking process such as chips or fried chicken.

Furthermore, the second parameter value of the food can comprise the color information of the food, i.e., the color parameter value of the surface of the food. Through detecting the color information of the food, the coloring effect of the food can be ensured in the hot air heating process, and furthermore, the hot air heating effect of the food is ensured, that is, the air frying effect of the food is ensured, and the flavor of the food is ensured.

In some embodiments, stopping conducting the microwave heating to the food under the condition of obtaining the first preset parameter value in the at least one first parameter value comprises: determining that the minimum value of the surface hardness of the food is obtained under the condition that the surface hardness of the food starts to increase; and stopping the microwave heating to the food.

In the embodiment, the microwave device of the cooking appliance is controlled to conduct microwave heating to the food when the temperature of the food is larger than or equal to a preset temperature, and meanwhile the surface hardness of the food is obtained. In the process of conducting microwave heating to the food, the food in a high temperature state will turn soft gradually, that is, the surface hardness of the food is the maximum value at the beginning of the heating, and with the increasing of the time of microwave heating, the tissue of the food are softened gradually, that is, the surface hardness of the food decreases gradually, and then remains a stable range. When the surface hardness of the food starts to increase, it shows that the microwave heating stage of the food can be ended. That is, when it is detected that the surface hardness of the food starts to increase, it shows that the surface hardness of the food has reached the minimum value, and the surface hardness of the food will increase gradually if the microwave heating continues. Therefore, the first preset parameter value of the food is the minimum value of the surface hardness of the food, that is, the microwave heating to the food can be stopped under the condition that the minimum value of the surface hardness of the food is obtained.

In some embodiments, obtaining the second parameter value of the food comprises: obtaining the weight of the food through a weight detection device of the cooking appliance; and determining the water loss rate of the food according to the weight of the food.

In the embodiment, the second parameter value of the food can comprise the water loss rate of the food, and correspondingly, in the process of obtaining the water loss rate of the food, the weight of the food can be obtained by the weight detection device configured in the cooking appliance, and then the water loss rate of the food is determined according to the weight of the food.

It can be understood that in the heating process of the food, the water in the food will be evaporated, and thus, the weight of the food will change, and therefore, the water loss rate of the food can be determined through the change of the weight of the food.

In an embodiment, firstly, when the food are placed in the cooking appliance, the weight detection device of the cooking appliance can detect the initial weight of the food, and in the heating process of the food, the weight detection device can obtain the current weight of the food in real time. Furthermore, the processor of the cooking appliance can subtract the current weight of the food from the initial weight of the food, and then divide the result into the initial weight of the food, to render the water loss rate of the food.

In some embodiments, the color information comprises the brightness and darkness, the red-green chromaticity and the yellow-blue chromaticity of the surface of the food; obtaining the second parameter value of the food further comprises: obtaining the brightness and darkness, the red-green chromaticity and the yellow-blue chromaticity of the surface of the food through an image recognition device of the cooking appliance.

In the embodiment, the second parameter value of the food can comprise the color information of the food; furthermore, the color information of the food can comprise the brightness and darkness, the red-green chromaticity and the yellow-blue chromaticity of the surface of the food. Correspondingly, in the process of obtaining the color information of the food, the image of the food can be obtained by the image recognition device of the cooking appliance; after the image of the food is obtained, the processor of the cooking appliance can determine the color information of the food according to the image of the food. That is, the brightness and darkness, the red-green chromaticity and the yellow-blue chromaticity of the surface of the food are obtained according to the image of the food.

In some embodiments, stopping conducting the hot air heating to the food under the condition that the second parameter value reaches the preset parameter value corresponding to the food comprises: stopping the hot air heating to the food under the condition that the water loss rate of the food is larger than a preset water loss rate, the brightness and darkness of the surface of the food is larger than a preset brightness and darkness, the red-green chromaticity of the surface of the food reaches a preset range of the red-green chromaticity and the yellow-blue chromaticity of the surface of the food is larger than a preset yellow-blue chromaticity.

In the embodiment, after the microwave heating process of the food is ended, that is, when the minimum value of the surface hardness of the food is obtained, the microwave heating to the food can be stopped, and the hot air device of the cooking appliance is started to achieve the hot air heating to the food.

In the process of conducting hot air heating to the food, the cooking appliance obtains the second parameter value of the food in real time, that is, the water loss rate of the food, the brightness and darkness, the red-green chromaticity and the yellow-blue chromaticity of the surface of the food. When the second parameter value of the food simultaneously satisfies that the water loss rate of the food is larger than the preset water loss rate, the brightness and darkness of the surface of the food is larger than the preset brightness and darkness, the red-green chromaticity of the surface of the food reaches the preset range of the red-green chromaticity and the yellow-blue chromaticity of the surface of the food is larger than the preset yellow-blue chromaticity, it means that the cooking for the food is accomplished, and at the moment, the hot air device of the cooking appliance can be closed, and the cooking for the food is accomplished.

Through arranging the second preset parameter value, i.e., the arrangement of the preset water loss rate, the preset brightness and darkness, the preset range of the red-green chromaticity and the preset yellow-blue chromaticity, the hot air heating effect to the food is ensured, the color and flavor of the food are ensured, and user experience is improved.

In some embodiments, before controlling the cooking appliance to conduct the microwave heating to the food, the control method further comprises: obtaining the temperature of the food; conducting the hot air heating to the food under the condition that the temperature of the food is lower than the preset temperature, until the temperature of the food is larger than or equal to the preset temperature; and the preset temperature is 0 °C.

In the embodiment, when the food are placed in the cooking appliance, firstly, the temperature of the food can be obtained, and when the temperature of the food is lower than the preset temperature, the food are heated through the hot air device of the cooking appliance, and the temperature of the food starts to rise, until the temperature of the food rises to the preset temperature, the hot air device of the cooking appliance is closed, and the microwave device of the cooking appliance is started to achieve microwave heating to the food.

The preset temperature can be 0°C. It can be understood that when the temperature of the food is lower than 0°C, it means that the food are in a frozen state; at the moment, if microwave heating is directly conducted to the food by the microwave device, the heating effect to the interior of the food will not be ensured; therefore, the food are subjected to a defrosting treatment in the hot air heating way, and the food reach 0°C or a temperature above0°C, and then are heated with microwave, and therefore, the microwave heating effect is ensured. Compared with directly conducting the defrosting treatment to the food by microwave, the temperature of the food can rise rapidly in the hot air heating way, and thus the cooking efficiency is improved.

In some embodiments, before controlling the cooking appliance to conduct microwave heating to the food, the control method further comprises: obtaining a type of the food; and determining the second preset parameter value according to the type of the food.

In the embodiment, before the food are cooked, the type of the food can be obtained firstly, and according to the type of the food, the second preset parameter value corresponding to the food is determined, that is, the preset water loss rate corresponding to the food, the preset brightness and darkness, the preset red-green chromaticity and the preset yellow-blue chromaticity of the surface of the food, to ensure the cooking effect of the food.

The second aspect according to the present disclosure provides a control device of a cooking appliance, comprising: a control unit, controlling the cooking appliance to conduct microwave heating to the food under the condition that the temperature of the food is larger than or equal to a preset temperature; an obtaining unit, obtaining a first parameter value of the food; and the control unit further stops the microwave heating to the food under the condition of obtaining the first preset parameter value in the first parameter value, and control the cooking appliance to conduct hot air heating to the food; the obtaining unit is further used to obtain a second parameter value of the food; the control unit further stops hot air heating to the food under the condition that the second parameter value reaches a preset parameter value corresponding to the food.

Cooking the food through the mutual cooperation between the microwave heating and the air fry heating can effectively shorten the cooking time of the food, improve the cooking efficiency, and meanwhile ensure the nutrients and flavor of the food and improve the user experience of the cooking appliance. Meanwhile, in the microwave heating process, through obtaining the first parameter value of the food, the heating duration of the microwave heating is determined, that is, the point of time when the microwave heating is switched into hot air heating; and through obtaining the second parameter value of the food, the duration of the hot air heating to the food is determined. The heating effect of hot air heating is ensured while the heating efficiency of the food is ensured, and then user experience is ensured.

Furthermore, the first parameter value comprises the surface hardness of the food, and the second parameter value comprises the water loss rate and the color information of the food.

Furthermore, the control device is in an embodiment configured to determine the minimum value of the obtained surface hardness of the food under the condition that the surface hardness of the food starts to increase, and to stop the microwave heating to the food.

Furthermore, the obtaining unit is in an embodiment configured to obtain the weight of the food through the weight detection device of the cooking appliance; and the control unit further determines the water loss rate of the food according to the weight of the food.

Furthermore, the color information comprises the brightness and darkness, the red-green chromaticity and the yellow-blue chromaticity of the surface of the food; the obtaining unit further obtains the brightness and darkness, the red-green chromaticity and the yellow-blue chromaticity of the surface of the food through the image recognition device of the cooking appliance.

Furthermore, the control unit further in an embodiment stops the hot air heating to the food under the condition that the water loss rate of the food is greater than the preset water loss rate, the brightness and darkness of the surface of the food is greater than the preset brightness and darkness, the red-green chromaticity of the surface of the food reaches the preset range of the red-green chromaticity and the yellow-blue chromaticity of the surface of the food is greater than the preset yellow-blue chromaticity.

Furthermore, the obtaining unit further obtains the temperature of the food before controlling the cooking appliance to conduct microwave heating to the food; the control unit further conducts hot air heating to the food under the condition that the temperature of the food is less than the preset temperature, until the temperature of the food is larger than or equal to the present temperature; and, the preset temperature is 0°C.

Furthermore, the obtaining unit further obtains the type of the food before controlling the cooking appliance to conduct the microwave heating to the food; and the control unit further determines the second preset parameter value according to the type of the food.

The third aspect according to the present disclosure provides a control device of a cooking appliance, comprising: a processor and a memory, and, programs or instructions which can run on the processor are stored in the memory, when the programs or instructions are executed, the steps of the control method of a cooking appliance provided in the first aspect are achieved.

The control device of a cooking appliance provided by the present disclosure comprises the memory and the processor, and further comprises the programs or instructions stored in the memory; when the programs or instructions are executed by the processor, the steps of the control method of a cooking appliance provided in the first aspect can be achieved; therefore, the control device of a cooking appliance has all the beneficial effects of the above control method of a cooking appliance, which are not repeated herein.

The fourth aspect according to the present disclosure provides a cooking appliance, which comprises the control device of a cooking appliance of any of the above embodiments.

The cooking appliance provided by the present disclosure comprises the control device of a cooking appliance of any of the above embodiments, and therefore, the cooking appliance has all the beneficial effects of the above control device of a cooking appliance, which are not repeated herein.

The fifth aspect of the present disclosure provides a computer-readable storage medium, in which programs or instructions are stored, when the programs or instructions are executed, the control method of a cooking appliance of any of the above embodiments is achieved.

Programs or instructions are stored in the computer-readable storage medium provided by the present disclosure, and therefore, when the programs or instructions are executed, the control method of a cooking appliance of any of the above embodiments can be achieved, and therefore, the readable storage medium has all the beneficial effects of the above control method of a cooking appliance, which are not repeated herein.

The additional aspects and advantages of the present disclosure will be obvious in the following description, or can be understood through the implementation of the present disclosure.

### BRIEF DESCRIPTION OF THE DRAWINGS

The above and/or additional aspects and advantages of the present disclosure will be obvious and understood easily from the following description of the embodiments in combination with the accompanying drawings.
FIG. 1 is a schematic flow chart of a control method of a cooking appliance according to an embodiment of the present disclosure;
FIG. 2 is a schematic flow chart of a control method of a cooking appliance according to another embodiment of the present disclosure;
FIG. 3 is a schematic flow chart of a control method of a cooking appliance according to another embodiment of the present disclosure;
FIG. 4 is a schematic flow chart of a control method of a cooking appliance according to another embodiment of the present disclosure;
FIG. 5 is a schematic view of the changes of the surface hardness of food over time in a cooking process according to an embodiment of the present disclosure;
FIG. 6 is a block diagram of the flow of the use process of a cooking appliance according to an embodiment of the present disclosure;
FIG. 7 is a block diagram of the structure of a control device of a cooking appliance according to an embodiment of the present disclosure; and
FIG. 8 is a block diagram of the structure of a control device of a cooking appliance according to another embodiment of the present disclosure.

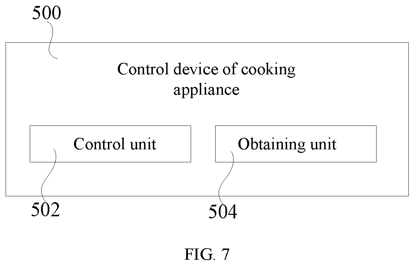

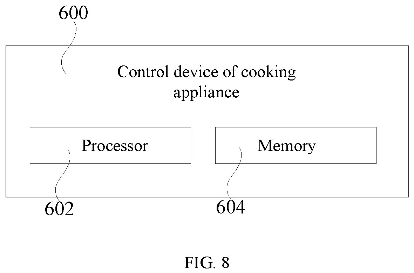

And, the corresponding relationships between the reference signs and the component names in FIG. 7 and FIG. 8 are as follows:
500: control device of cooking appliance, 502: control unit, 504: obtaining unit, 600: control device of cooking appliance, 602: processor, and 604: memory

### DETAILED DESCRIPTION OF THE DISCLOSURE

To more clearly understand the above purposes, features and advantages of the present disclosure, the present disclosure will be further detailed hereinafter in combination with the accompanying drawings and embodiments. It should be indicated that in the case of no conflict, the embodiments and the features in the embodiments of the present disclosure can be combined with each other.

Many details are illustrated in the following description for the convenience of a thorough understanding to the present disclosure, but the present disclosure can further be implemented using other embodiments other than these described herein. Therefore, the protection scope of the present disclosure is not limited to the specific embodiments disclosed in the following text.

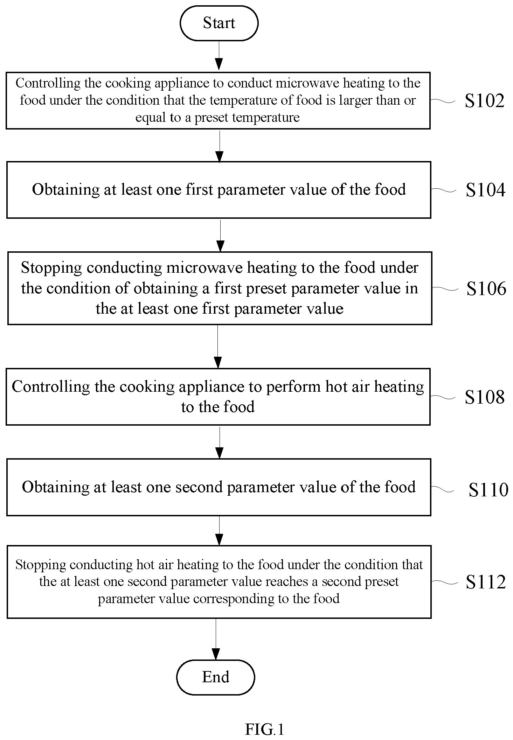

A control method and a control device of a cooking appliance and a cooking appliance according to some embodiments of the present disclosure are described in the following by referring to FIG. 1 to FIG. 8.

As shown in FIG. 1, according to an embodiment of the present disclosure, a control method of a cooking appliance is provided, comprising:
5102: controlling the cooking appliance to conduct microwave heating to the food under the condition that the temperature of food is larger than or equal to a preset temperature;
5104: obtaining at least one first parameter value of the food;
5106: stopping conducting microwave heating to the food under the condition of obtaining a first preset parameter value in the at least one first parameter value;
5108: controlling the cooking appliance to conduct hot air heating to the food;
5110: obtaining at least one second parameter value of the food; and
5112: stopping conducting hot air heating to the food under the condition that the at least one second parameter value reaches a second preset parameter value corresponding to the food.

The control method of a cooking appliance provided by the present disclosure can be used for a cooking appliance which has the functions of both microwave heating and air frying at the same time, i.e., the process that the food can be heated through microwave and can further be air fry heated through hot air. It can be understood that the heating efficiency for the food is higher by microwave heating, and it can effectively shorten the heating process during a cooking process and improve the cooking efficiency. The air frying does not use oil or uses a little oil during a frying process, and greatly reduces the oil content of foods, retains nutrients, and produces more aromatic components and less harmful components; in addition, it can achieve coloring the surface of the food, improve the flavor of the food, and thus improve the cooking effect. Cooking the food through the cooperation of the microwave heating with the air frying heating can effectively shorten the cooking time of the food, improve the cooking efficiency, and meanwhile can ensure the nutrients and flavor of the food and thus improve the user experience of the cooking appliance.

Furthermore, in the cooking process, firstly, the temperature of the food can be obtained, a microwave heating device of the cooking appliance can be controlled to conduct microwave heating to the food when the temperature of the food is larger than or equal to the preset temperature, to ensure that the food are rapidly cooked and ensure the heating efficiency of the food. And, the preset temperature can be 0°C, that is, when it is determined that the food are not in a frozen state, microwave heating is then conducted to the food, to ensure that the microwave heating can act on the interior of the food in the microwave heating process and ensure the heating effect of the food.

Furthermore, in the process of heating the food with microwave, at least one first parameter value of the food is obtained. That is, in the process of conducting microwave heating to the food, the first parameter value of the food is obtained in real-time through a sensor configured in the cooking appliance. The microwave heating to the food can be stopped under the condition that the first preset parameter value in the first parameter value is obtained. In an embodiment, the first preset parameter value in the first parameter value can be the maximum value or the minimum value of the first parameter value in a variation process, the variation process of the food can be detected in real-time through obtaining the first parameter value; when the food change to a state desired by a user, i.e., under the condition that the first preset parameter value in the first parameter value is obtained, it means that the doneness of the food has reached the doneness desired by the user, and then it is unnecessary to conduct microwave heating to the food through a microwave device.

Furthermore, when the microwave heating to the food is stopped, hot air heating can be conducted to the food through a hot air device, that is, air frying is conducted to the food. It can be understood that when the food are heated to the desired doneness through the microwave heating way, the food can be heated through the air frying way to achieve the effect of coloring the surface of the food and improving the flavor of the food. Meanwhile, the hot air heating process can effectively avoid the loss of nutrients due to a high temperature state for a long time and ensure the nutritive value of the food in the maximum extent.

Furthermore, in the process of conducting hot air heating to the food, the second parameter value of the food can be obtained; through obtaining the second parameter value, the air frying effect of the food can be detected. Thus, under the condition that the second parameter value of the food reaches the second preset parameter value corresponding to the food, i.e., when the air frying effect of the food achieves the desired effect of the user, the hot air heating to the food can be stopped, and the cooking process of the food is accomplished.

According to the control method of a cooking appliance provided by the present disclosure, cooking the food through the mutual cooperation between the microwave heating and the air fry heating can effectively shorten the cooking time of the food, improve the cooking efficiency, and meanwhile ensure the nutrients and flavor of the food and improve the user experience of the cooking appliance. Meanwhile, in the microwave heating process, through obtaining the first parameter value of the food, the heating duration of the microwave heating is determined, that is, the point of time when the microwave heating is switched into hot air heating; and through obtaining the second parameter value of the food, the duration of the hot air heating to the food is determined. The heating effect of hot air heating is ensured while the heating efficiency of the food is ensured, and then user experience is ensured.

Furthermore, the first parameter value comprises the surface hardness of the food, and the second parameter value comprises the water loss rate of the food and the color information of the food.

In an embodiment, the first parameter value of the food can be the surface hardness of the food, the surface hardness of the food in the cooking process such as chips or fried chicken.

Furthermore, the second parameter value of the food can comprise the color information of the food, i.e., the color parameter value of the surface of the food. Through detecting the color information of the food, the coloring effect of the food can be ensured in the hot air heating process, and furthermore, the hot air heating effect of the food is ensured, that is, the air frying effect of the food is ensured, and the flavor of the food is ensured.

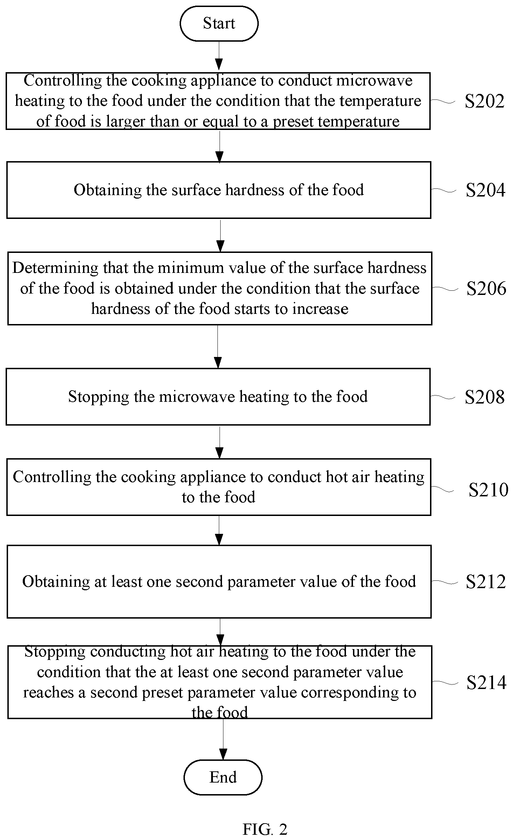

According to an embodiment of the present disclosure, as shown in FIG. 2, a control method of a cooking appliance is provided, comprising:
5202: controlling the cooking appliance to conduct microwave heating to the food under the condition that the temperature of food is larger than or equal to a preset temperature;
5204: obtaining the surface hardness of the food;
5206: determining that the minimum value of the surface hardness of the food is obtained under the condition that the surface hardness of the food starts to increase;
5208: stopping the microwave heating to the food;
5210: controlling the cooking appliance to conduct hot air heating to the food;
5212: obtaining at least one second parameter value of the food; and
5214: stopping conducting hot air heating to the food under the condition that the at least one second parameter value reaches a second preset parameter value corresponding to the food.

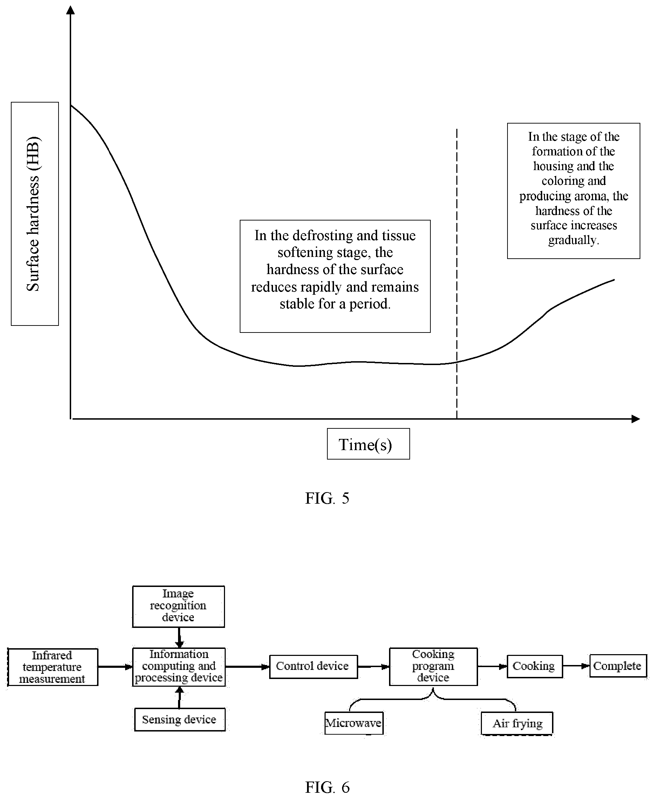

In the embodiment, as shown in FIG. 5, the microwave device of the cooking appliance is controlled to conduct microwave heating to the food when the temperature of the food is larger than or equal to a preset temperature, and meanwhile the surface hardness of the food is obtained. In the process of conducting microwave heating to the food, the food in a high temperature state will turn soft gradually, that is, the surface hardness of the food is the maximum value at the beginning of the heating, and with the increasing of the time of microwave heating, the tissue of the food are softened gradually, that is, the surface hardness of the food decreases gradually, and then remains a stable range. When the surface hardness of the food starts to increase, it shows that the microwave heating stage of the food can be ended. That is, when it is detected that the surface hardness of the food starts to increase, it shows that the surface hardness of the food has reached the minimum value, and the surface hardness of the food will increase gradually if the microwave heating continues. Therefore, the first preset parameter value of the food is the minimum value of the surface hardness of the food, that is, the microwave heating to the food can be stopped under the condition that the minimum value of the surface hardness of the food is obtained.

In some embodiments, obtaining the second parameter value of the food comprises: obtaining the weight of the food through a weight detection device of the cooking appliance; and determining the water loss rate of the food according to the weight of the food.

In the embodiment, the second parameter value of the food can comprise the water loss rate of the food, and correspondingly, in the process of obtaining the water loss rate of the food, the weight of the food can be obtained by the weight detection device configured in the cooking appliance, and then the water loss rate of the food is determined according to the weight of the food.

It can be understood that in the heating process of the food, the water in the food will be evaporated, and thus, the weight of the food will change, and therefore, the water loss rate of the food can be determined through the change of the weight of the food.

In an embodiment, firstly, when the food are placed in the cooking appliance, the weight detection device of the cooking appliance can detect the initial weight of the food, and in the heating process of the food, the weight detection device can obtain the current weight of the food in real time. Furthermore, the processor of the cooking appliance can subtract the current weight of the food from the initial weight of the food, and then divide the result into the initial weight of the food, to render the water loss rate of the food.

Furthermore, the color information comprises the brightness and darkness, the red-green chromaticity and the yellow-blue chromaticity of the surface of the food; obtaining the second parameter value of the food further comprises: obtaining the brightness and darkness, the red-green chromaticity and the yellow-blue chromaticity of the surface of the food through an image recognition device of the cooking appliance.

In an embodiment, the second parameter value of the food can comprise the color information of the food; furthermore, the color information of the food can comprise the brightness and darkness, the red-green chromaticity and the yellow-blue chromaticity of the surface of the food. Correspondingly, in the process of obtaining the color information of the food, the image of the food can be obtained by the image recognition device of the cooking appliance; after the image of the food is obtained, the processor of the cooking appliance can determine the color information of the food according to the image of the food. That is, the brightness and darkness, the red-green chromaticity and the yellow-blue chromaticity of the surface of the food are obtained according to the image of the food.

In some embodiments, stopping the hot air heating to the food under the condition that the second parameter value reaches the preset parameter value corresponding to the food comprises: stopping the hot air heating to the food under the condition that the water loss rate of the food is larger than a preset water loss rate, the brightness and darkness of the surface of the food is larger than a preset brightness and darkness, the red-green chromaticity of the surface of the food reaches a preset range of the red-green chromaticity and the yellow-blue chromaticity of the surface of the food is larger than a preset yellow-blue chromaticity.

In the embodiment, after the microwave heating process of the food is ended, that is, when the minimum value of the surface hardness of the food is obtained, the microwave heating to the food can be stopped, and the hot air device of the cooking appliance is started to achieve the hot air heating to the food.

In the process of conducting hot air heating to the food, the cooking appliance obtains the second parameter value of the food in real time, that is, the water loss rate of the food, the brightness and darkness, the red-green chromaticity and the yellow-blue chromaticity of the surface of the food. When the second parameter value of the food simultaneously satisfies that the water loss rate of the food is larger than the preset water loss rate, the brightness and darkness of the surface of the food is larger than the preset brightness and darkness, the red-green chromaticity of the surface of the food reaches the preset range of the red-green chromaticity and the yellow-blue chromaticity of the surface of the food is larger than the preset yellow-blue chromaticity, it means that the cooking for the food is accomplished, and at the moment, the hot air device of the cooking appliance can be closed, and the cooking for the food is accomplished.

Through arranging the second preset parameter value, i.e., the arrangement of the preset water loss rate, the preset brightness and darkness, the preset range of the red-green chromaticity and the preset yellow-blue chromaticity, the hot air heating effect to the food is ensured, the color and flavor of the food are ensured, and user experience is improved.

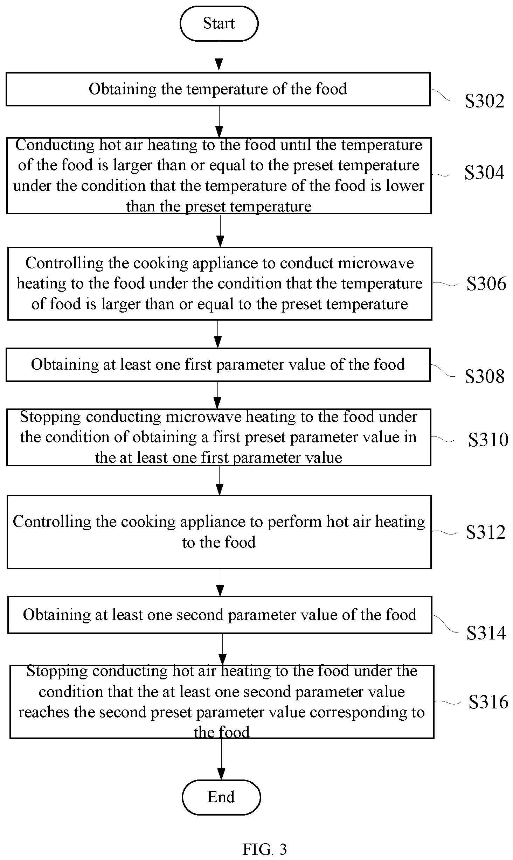

According to an embodiment of the present disclosure, as shown in FIG. 3, a control method of a cooking appliance is provided, comprising:
5302: obtaining the temperature of the food;
5304: conducting hot air heating to the food until the temperature of the food is larger than or equal to the preset temperature under the condition that the temperature of the food is lower than the preset temperature;
5306: controlling the cooking appliance to conduct microwave heating to the food under the condition that the temperature of food is larger than or equal to the preset temperature;
5308: obtaining at least one first parameter value of the food;
5310: stopping conducting microwave heating to the food under the condition of obtaining a first preset parameter value in the at least one first parameter value;
5312: controlling the cooking appliance to conduct hot air heating to the food;
5314: obtaining at least one second parameter value of the food; and
5316: stopping conducting hot air heating to the food under the condition that the at least one second parameter value reaches the second preset parameter value corresponding to the food.

In the embodiment, when the food are placed in the cooking appliance, firstly, the temperature of the food can be obtained, and when the temperature of the food is lower than the preset temperature, the food are heated through the hot air device of the cooking appliance, and the temperature of the food starts to rise, until the temperature of the food rises to the preset temperature, the hot air device of the cooking appliance is closed, and the microwave device of the cooking appliance is started to achieve microwave heating to the food.

The preset temperature can be 0°C. It can be understood that when the temperature of the food is lower than 0°C, it means that the food are in a frozen state; at the moment, if microwave heating is directly conducted to the food by the microwave device, the heating effect to the interior of the food will not be ensured; therefore, the food are subjected to a defrosting treatment in the hot air heating way, and the food reach 0°C or a temperature above0°C, and then are heated with microwave, and therefore, the microwave heating effect is ensured. Compared with directly conducting the defrosting treatment to the food by microwave, the temperature of the food can rise rapidly in the hot air heating way, and thus the cooking efficiency is improved.

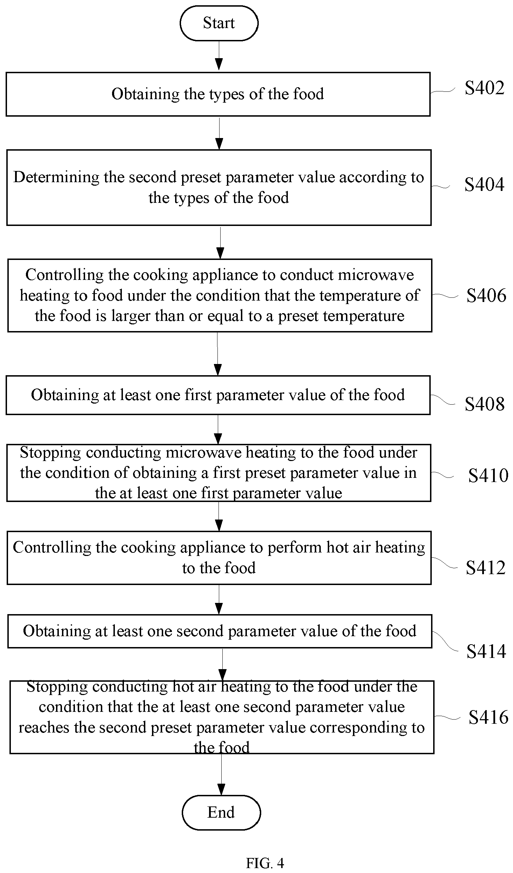

According to an embodiment of the present disclosure, as shown in FIG. 4, a control method of a cooking appliance is provided, comprising:
5402: obtaining the types of the food; and
5404: determining the second preset parameter value according to the types of the food;
5406: controlling the cooking appliance to conduct microwave heating to food under the condition that the temperature of the food is larger than or equal to a preset temperature;
5408: obtaining at least one first parameter value of the food;
5410: stopping conducting microwave heating to the food under the condition of obtaining a first preset parameter value in the at least one first parameter value;
5412: controlling the cooking appliance to conduct hot air heating to the food;
5414: obtaining at least one second parameter value of the food; and
5416: stopping conducting hot air heating to the food under the condition that the at least one second parameter value reaches the second preset parameter value corresponding to the food.

In the embodiment, before the food are cooked, the types of the food can be obtained firstly, and according to the types of the food, the second preset parameter value corresponding to the food is determined, that is, the preset water loss rate corresponding to the food, the preset brightness and darkness, the preset red-green chromaticity and the preset yellow-blue chromaticity of the surface of the food, to ensure the cooking effect of the food.

In an embodiment, chips are used as an example, the preset water loss rate of the food can be larger than or equal to 40%, the preset brightness and darkness of the surface of the food can be 60 cd/m², and the preset range of the red-green chromaticity can be -10 to 0, and the preset yellow-blue chromaticity can be 20.

Cooking frozen pre-cooked chips which weight is 454g is taken as an example, and firstly, the frozen chips are placed in a cooking cavity. It is detected that the temperature of the chips is below 0°C, at this moment, the hot air device of the cooking appliance is started to heat the chips, and in an embodiment, the hot air device of the cooking appliance can be controlled to operate at a power of 1600w, and the temperature of the cooking cavity where the food is placed is controlled at 210°C. When the temperature of the chips reaches 0°C, the hot air device can be turned off. That is, the defrosting stage of the chips is accomplished, and in an embodiment, the stage of defrosting the chips lasts 4 minutes.

Furthermore, the microwave device of the cooking appliance is started to achieve microwave heating to the chips, i.e., the tissue softening stage of the chips. The power of the microwave device of the cooking appliance is set to be 1400w, meanwhile, the surface hardness of the chips is detected, that is, the surface hardness of the chips. When it is detected that the surface hardness of the chips decreases gradually, then levels off and then begins to rise, the microwave heating to the chips can be stopped. That is, the tissue softening stage of the chips is accomplished, and in an embodiment, the tissue softening stage lasts 10 minutes.

Furthermore, the hot air device of the cooking appliance is started again to conduct hot air heating to the softened chips, i.e., the process of conducting air frying to the chips, to achieve a shell forming, coloring and aroma producing stage of the chips. In an embodiment, the hot air device of the cooking appliance can be controlled to operate at a power of 1600w, and the temperature of the cooking cavity where the food are placed is controlled at 210°C. Meanwhile, the water loss rate of the chips, the brightness and darkness, the red-green chromaticity and the yellow-blue chromaticity of the surface of the chips are detected. When the water loss rate of the chips is larger than or equal to 40%,the brightness and darkness L of the surface of the chips is greater than 60, and the red-green chromaticity *a* of the surface of the chips is in the range of -10 to 0, and the yellow-blue chromaticity b of the surface of the chips is greater than 20, that is, under the condition that *L*>60, -10≤*a*≤0, and *b*>20, it shows that the chips has reached the user's requirements, and then, the hot air device of the cooking appliance can be turned off and the cooking of the chips is accomplished. In an embodiment, the shell forming, coloring and aroma producing stage of the chips lasts 14 minutes.

In an actual cooking process, it takes 42 minutes to cook 454g of frozen precooked chips using air frying in the whole process, and thus the cooking effect of the chips can be ensured. However, if the cooking method of the present disclosure is adopted, the cooking time is 28 minutes (the defrosting stage of the chips lasts 4 minutes, the tissue softening stage lasts 10 minutes, and the shell forming, coloring and aroma producing stage lasts 14 minutes), the cooking time is shortened by 33%, and thus, the cooking time of the chips is effectively shortened and the cooking efficiency is improved.

As shown in FIG. 7, the second aspect according to the present disclosure provides a control device 500 of a cooking appliance, comprising: a control unit 502, used to control the cooking appliance to conduct microwave heating to the food under the condition that the temperature of the food is larger than or equal to a preset temperature; an obtaining unit 504, used to obtain a first parameter value of the food; and the control unit 502 is further used to stop the microwave heating to the food under the condition that the first preset parameter value of the first parameter value is obtained, and control the cooking appliance to conduct hot air heating to the food; the obtaining unit 504 is further used to obtain a second parameter value of the food; the control unit 502 is further used to stop hot air heating to the food under the condition that the second parameter value reaches a preset parameter value corresponding to the food.

Cooking the food through the mutual cooperation between the microwave heating and the air fry heating can effectively shorten the cooking time of the food, improve the cooking efficiency, and meanwhile ensure the nutrients and flavor of the food and improve the user experience of the cooking appliance. Meanwhile, in the microwave heating process, through obtaining the first parameter value of the food, the heating duration of the microwave heating is determined, that is, the point of time when the microwave heating is switched into hot air heating; and through obtaining the second parameter value of the food, the duration of the hot air heating to the food is determined. The heating effect of hot air heating is ensured while the heating efficiency of the food is ensured, and then user experience is ensured.

Furthermore, the first parameter value comprises the surface hardness of the food, and the second parameter value comprises the water loss rate and the color information of the food.

Furthermore, the control unit 502 is in an embodiment configured to determine the minimum value of the obtained surface hardness of the food under the condition that the surface hardness of the food starts to increase, and to stop the microwave heating to the food.

Furthermore, the obtaining unit 504 is in an embodiment configured to obtain the weight of the food through the weight detection device of the cooking appliance; and the control unit 502 is further used to determine the water loss rate of the food according to the weight of the food.

Furthermore, the color information comprises the brightness and darkness, the red-green chromaticity and the yellow-blue chromaticity of the surface of the food; the obtaining unit 504 is further used to obtain the brightness and darkness, the red-green chromaticity and the yellow-blue chromaticity of the surface of the food through the image recognition device of the cooking appliance.

Furthermore, the control unit 502 is further in an embodiment used to stop the hot air heating to the food under the condition that the water loss rate of the food is greater than the preset water loss rate, the brightness and darkness of the surface of the food is greater than the preset brightness and darkness, the red-green chromaticity of the surface of the food reaches the preset range of the red-green chromaticity and the yellow-blue chromaticity of the surface of the food is greater than the preset yellow-blue chromaticity.

Furthermore, the obtaining unit 504 is further used to obtain the temperature of the food before controlling the cooking appliance to conduct microwave heating to the food; the control unit 502 is further used to conduct hot air heating to the food under the condition that the temperature of the food is less than the preset temperature, until the temperature of the food is larger than or equal to the present temperature; and, the preset temperature is 0°C.

Furthermore, the obtaining unit 504 is further used to obtain the types of the food before controlling the cooking appliance to conduct the microwave heating to the food; and the control unit 502 is further used to determine the second preset parameter value according to the types of the food.

As shown in FIG. 8, the third aspect according to the present disclosure provides a control device 600 of a cooking appliance, comprising: a processor 602 and a memory 604, and, programs or instructions which can run on the processor 602 are stored in the memory 604, when the programs or instructions are executed, the steps of the control method of a cooking appliance provided in the first aspect are achieved.

The control device 600 of a cooking appliance provided by the present disclosure comprises the memory 604 and the processor 602, and further comprises the programs and instructions stored in the memory 604; when the programs or instructions are executed by the processor 602, the steps of the control method of a cooking appliance provided in the first aspect can be achieved; therefore, the control device 600 of a cooking appliance has all the beneficial effects of the above control method of a cooking appliance, which are not repeated herein.

The fourth aspect according to the present disclosure provides a cooking appliance, which comprises the control device of a cooking appliance of any of the above embodiments.

The cooking appliance provided by the present disclosure comprises the control device of a cooking appliance of any of the above embodiments, and therefore, the cooking appliance has all the beneficial effects of the above control device of a cooking appliance, which are not repeated herein.

In an embodiment, as shown in FIG. 6, the cooking appliance comprises: an infrared temperature measuring device, configured to measure the temperature of the food; an image recognizing device, configured to obtain the image of the food; a sensing device, configured to detect the surface hardness of the food; an information computing and processing device, configured to process the data detected by the infrared temperature measuring device, the image recognizing device and the sensing device, to render the first parameter value and the second parameter value of the food. Furthermore, the cooking appliance further comprises a cooking program device, configured to realize the microwave heating and the hot air heating of the cooking appliance, i.e., the air frying process. Furthermore, the cooking appliance further comprises a control device, the control device is connected to the information computing and processing device and the cooking program device, and configured to control the cooking program device according to the data obtained by the information computing and processing device.

The fifth aspect of the present disclosure provides a computer-readable storage medium, in which programs or instructions are stored, when the programs or instructions are executed, the control method of a cooking appliance of any of the above embodiments is achieved.

Programs or instructions are stored in the computer-readable storage medium provided by the present disclosure, and therefore, when the programs or instructions are executed, the control method of a cooking appliance of any of the above embodiments can be achieved, and therefore, the readable storage medium has all the beneficial effects of the above control method of a cooking appliance, which are not repeated herein.

In the specification of the present disclosure, the term of "multiple" indicates two or more, unless otherwise explicitly specified or defined; the orientation or position relations indicated by the terms of "upper", "lower" and the like are based on the orientation or position relations shown in the accompanying drawings, and they are just intended to conveniently describe the present application and simplify the description, and are not intended to indicate or imply that the devices or units as indicated should have specific orientations or should be configured or operated in specific orientations, and then should not be construed as limitations to the present application; the terms of "connected to", "assembling", "fixing" and the like should be understood in a broad sense, for example, the term "connected to" may be a fixed connection, and may further be a removable connection, or an integral connection; and the term may be a direct connection and may further be an indirect connection through an intermediate medium. A person of ordinary skills in the art could understand the specific meanings of the terms in the present disclosure according to specific situations.

In the description of the present specification, the descriptions of the phrases "one embodiment", "some embodiments" and "specific embodiments" and the like mean that the specific features, structures, materials or characteristics described in combination with the embodiment(s) or example(s) are comprised in at least one embodiment or example of the present disclosure. In the specification, the schematic representation of the above phrases does not necessarily refer to the same embodiment or example. Moreover, the particular features, structures, materials or characteristics described may be combined in a suitable manner in any one or more of the embodiments or examples.

The descriptions above are only some embodiments of the present disclosure, and are not used to limit the present disclosure. For a person skilled in the art, the present disclosure may have various changes and variations. Any modifications, equivalent substitutions, improvements, etc. made within the spirit and principle of the present disclosure shall all be comprised in the protection scope of the present disclosure.

## Claims

1. A control method of a cooking appliance, comprising:
controlling the cooking appliance to conduct microwave heating to a food under a condition that a temperature of the food is larger than or equal to a preset temperature;
obtaining at least a first parameter value of the food;
stopping conducting the microwave heating to the food under a condition of obtaining a first preset parameter value in the at least one first parameter value;
controlling the cooking appliance to conduct hot air heating to the food;
obtaining at least a second parameter value of the food; and
stopping conducting the hot air heating to the food under a condition that the at least one second parameter value reaches a second preset parameter value corresponding to the food.

2. The control method according to claim 1, wherein, the first parameter value comprises surface hardness of the food, and the second parameter value comprises a water loss rate of the food and color information of the food.

3. The control method according to claim 2, wherein, the step of stopping conducting the microwave heating to the food under the condition of obtaining the first preset parameter value in the at least one first parameter value comprises:
determining that a minimum value of the surface hardness of the food is obtained under a condition that the surface hardness of the food starts to increase; and
stopping conducting the microwave heating to the food.

4. The control method according to claim 2, wherein, the step of obtaining at least one second parameter value of the food comprises:
obtaining a weight of the food through a weight detection device of the cooking appliance; and
determining the water loss rate of the food according to the weight of the food.

5. The control method according to claim 2, wherein, the color information comprises a brightness and darkness, a red-green chromaticity and a yellow-blue chromaticity of a surface of the food; and obtaining the second parameter value of the food further comprises:
obtaining the brightness and darkness, the red-green chromaticity and the yellow-blue chromaticity of the surface of the food through an image recognition device of the cooking appliance.

6. The control method according to claim 5, wherein, the step of stopping conducting the hot air heating to the food under the condition that at least one second parameter value reaches the second preset parameter value corresponding to the food comprises:
stopping the hot air heating to the food under a condition that the water loss rate of the food is larger than a preset water loss rate, the brightness and darkness of the surface of the food is larger than a preset brightness and darkness, the red-green chromaticity of the surface of the food reaches a preset range of the red-green chromaticity and the yellow-blue chromaticity of the surface of the food is larger than a preset yellow-blue chromaticity.

7. The control method according to any one of claims 1 to 6, before the step of controlling the cooking appliance to conduct the microwave heating to the food, further comprising:
obtaining the temperature of the food;
conducting the hot air heating to the food under a condition that the temperature of the food is lower than the preset temperature, until the temperature of the food is larger than or equal to the preset temperature;
wherein the preset temperature is 0 °C.

8. The control method according to any one of claims 1 to 6, wherein the step of controlling the cooking appliance to conduct microwave heating to the food under the condition that the temperature of the food is larger than or equal to a preset temperature further comprises:
obtaining a type of the food; and
determining the second preset parameter value according to the type of the food.

9. A control device of a cooking appliance, comprising:
a control unit, controlling the cooking appliance to conduct microwave heating to a food under a condition that a temperature of the food is larger than or equal to a preset temperature; and
an obtaining unit, obtaining at least a first parameter value of the food;
wherein, the control unit further stops the microwave heating to the food under a condition of obtaining a first preset parameter value in the at least a first parameter value, and
controls the cooking appliance to conduct hot air heating to the food; and wherein
the obtaining unit further obtains at least a second parameter value of the food; and wherein
the control unit further stops the hot air heating to the food under a condition that the at least one second parameter value reaches a preset parameter value corresponding to the food.

10. A control device of a cooking appliance, comprising:
a processor and a memory, wherein, a program or an instruction which can run on the processor are stored in the memory, when the program or instruction is executed, a step of a control method of a cooking appliance in any of claim 1 to claim 8 is implemented.

11. A cooking appliance, comprising:
a control device of a cooking appliance of claim 9 or 10.

12. A computer-readable storage medium, and a program or an instruction is stored in the computer-readable storage medium, when the program or instruction is executed, a step of a control method of a cooking appliance of any one of claims 1 to 8 is implemented.
